# EUROPÄISCHE PATENTSCHRIFT

(11) **EP 1 661 828 B1**
(45) Veröffentlichungstag und Bekanntmachung des Hinweises auf die Patenterteilung: **06.09.2006**
(21) Anmeldenummer: 04025852.7
(22) Anmeldetag: 30.10.2004
(51) Int. Cl.: B65G 17/00

(54) **Werkstückträger für eine Werkstückfördereinrichtung mit einer Förderkette und einer Führungsbahn**
Work piece carrier for a transport system having a conveyor chain and a guide track
Support de pièce pour un système de transport avec une chaîne de convoyage et une voie de guidage

(43) Veröffentlichungstag der Anmeldung: 31.05.2006
(73) Patentinhaber: EWAB Holding AG c/o Zumida Treuhand AG, 6301 Zug (CH)
(72) Erfinder: Oppermann, Walter, 34346 Hann. Münden (DE)
(74) Vertreter: Rehberg Hüppe + Partner

(56) Entgegenhaltungen:
- EP-A- 0 163 617
- WO-A-94/26637
- CH-A- 669 167

## Beschreibung

Die Erfindung betrifft einen Werkstückträger mit den Merkmalen des Oberbegriffs des Patentanspruchs 1. Weiterhin betrifft die Erfindung eine Werkstückfördereinrichtung mit einer Mehrzahl von solchen Werkstückträgern und den weiteren Merkmalen des Oberbegriffs des Anspruchs 10.

### STAND DER TECHNIK

Eine Werkstückfördereinrichtung mit einer Mehrzahl von Werkstückträgern ist aus der EP 0 163 617 A2 bekannt. In einer Vertiefung einer Führungsbahn verläuft eine Förderkette, die sich am Grund der Vertiefung an der Führungsbahn abstützt. Werkstückträger weisen jeweils einen vorderen und einen hinteren Führungsfuß auf, die in der Vertiefung auf der Förderkette aufstehen, so dass die Förderkette die Schwerkraft der Werkstücksträger abstützt und die Werkstückträger durch Übertragung von Reibungskräften mitnimmt. Die Führungsbahn führt durch die Seitenwandungen ihrer Vertiefung sowohl die Förderkette als auch die darauf aufstehenden Führungsfüße der Werkstückträger und damit die Werkstückträger selbst. Die Werkstückträger werden zur Bearbeitung der von Ihnen beförderten Werkstücke an Bearbeitungsstationen angehalten. Vor einer solchen Bearbeitungsstation können sich mehrere Werkstückträger aufstauen. Dabei läuft die Förderkette in der Vertiefung unter den Führungsfüßen der Werkstückträger weiter, da sie über eine Mehrzahl von Bearbeitungsstationen für die Werkstücke hinweg vorgesehen ist und über ihre gesamte Länge den Transport aller nicht gerade bearbeiteten oder auf eine Bearbeitung wartenden Werkstücke auf Werkstückträgern bewirken soll. Um bei dieser Vorgabe den von einer Mehrzahl von vor einer Bearbeitungsstation aufgestauten, auf der unter ihnen durchlaufenden Förderkette aufstehenden Werkstückträgern verursachten Staudruck zu reduzieren, ist es nach der EP 0 163 617 A2 vorgesehen, ringförmige Puffer aus elastischem Material zwischen den Werkstückträgern anzuordnen, die von den auflaufenden Führungsfüßen so deformiert werden, dass sie sich an die Seitenwandungen der Vertiefung in der Führungsbahn anlegen und so für eine Abstützung der Werkstückträger gegenüber der Führungsbahn sorgen. Die Übertragung von Reibungskräften von der Förderkette auf die Führungsfüße der Werkstückträger wird hierdurch aber nicht unterbunden. Der Staudruck tritt weiterhin auf, er wird nur über einen größeren Abschnitt der Führungsbahn abgetragen und lastet nicht allein auf der jeweiligen Bearbeitungsstation, vor der sich die Werkstückträger aufstauen. Dabei sind die von der Förderkette auf die einzelnen Werkstückträger aufgebrachten Reibungskräfte auch deshalb nicht unerheblich, weil sich die Werkstückträger in horizontaler Richtung ausschließlich über ihre Führungsfüße an der Förderkette abstützen. Bei schwereren Werkstücken resultieren hieraus erhebliche Normalkräfte, die in erheblichen Reibungskräften resultieren.

Bei einer bekannten Werkstückfördereinrichtung mit den Merkmalen des Oberbegriffs des Anspruchs 10, die eine Mehrzahl von Werkstückträgern mit den Merkmalen des Oberbegriffs des Anspruchs 1 aufweist, stützen sich die Werkstückträger zusätzlich zu den zwei Führungsfüßen, die in der Vertiefung der Führungsbahn auf der Förderkette aufstehen, über eine Abstützrolle an der Führungsbahn ab, die auf einer sich seitlich von der Vertiefung weg erstreckenden Abstützfläche der Führungsbahn abrollt. Isoliert in Richtung der Förderkette betrachtet ist die Abstützrolle zwischen den beiden Führungsfüßen angeordnet. So ergibt sich eine Dreipunktabstützung jedes Werkstückträgers an der Führungsbahn, bei der nicht nur die Normalkräfte der Führungsfüße auf die Förderkette reduziert sind und somit die von der Förderkette auf die Werkstückträger übertragenen Reibungskräfte reduziert werden können, sondern bei der auch eine Stabilisierung der Werkstückträger um die Längsachse der Führungsbahn erreicht ist, so dass der Schwerpunkt der Werkstückträger mit und ohne Werkstück nicht mehr genau über der Förderkette angeordnet sein muss, sondern auch einen variablen seitlichen Versatz hierzu aufweisen kann. Allerdings treten durch die auslegerartig angeordneten Abstützrollen Momente um eine Vertikalachse auf die Werkstückträger auf, die durch die Führung der Führungsfüße in der Vertiefung der Führungsbahn abzustützen sind. Um diese Momente zu begrenzen, ist bei dem bekannten Werkstückträger die Abstützrolle um eine vertikale Schwenkachse verschwenkbar gelagert, die in einem Abstand zu der horizontalen Drehachse der Abstützrolle verläuft. Zur Reduzierung des Staudruckes von sich vor einer Bearbeitungsstation aufstauenden Werkstückträgern ist bei den bekannten Werkstückförderern eine Anordnung vorgesehen, die im Falle des Aufstauens die beiden bis dahin mit der Förderkette in Kontakt stehenden Führungsfüße von der Förderkette abhebt. Hierzu sind zwischen der Abstützrolle und den Führungsfüßen ein vorderes und ein hinteres Kettenglied um jeweils eine horizontal und quer zu der Längsachse der Führungsbahn verlaufende Schwenkachse an dem Werkstückträger gelagert. Die bei sich aufstauenden Werkstückträgern an entsprechende Kettenglieder an den vor- und nachlaufenden Werkstückträgern anschlagenden Kettenglieder zeigen zunächst schräg nach vorne bzw. schräg nach hinten zeigen und werden durch den Anschlag weiter nach unten verschwenkt, bis sie neben der Vertiefung auf die Abstützfläche der Führungsbahn aufsetzen und in der Folge den Werkstückträger in diesem Bereich soweit anheben, dass seine Führungsfüße von der Förderkette abheben. Sobald dies geschehen ist, erfolgt keine Übertragung mehr von Reibungskräften zwischen der Förderkette und den Führungsfüßen des Werkstückträgers. Auch durch die einseitig von der Vertiefung angeordneten Kettenglieder werden Momente um eine vertikale Achse auf die Werkstückträger ausgeübt, wenn sich die Kettenglieder an der Abstützfläche abstützen, auch wenn dies über endseitige Rollen geschieht, die die auftretende Reibung reduzieren. Um beide Führungsfüße von der Förderkette abzuheben, müssen beide Kettenglieder nach unten gedrückt werden, d. h. sie müssen zwischen einem dem jeweiligen Werkstücksträger vorlaufenden und einem nachlaufenden Werkstückträger zusammengedrückt werden. Ein einfaches Auflaufen des Werkstückträgers auf einen vorlaufenden Werkstückträger ist hierfür nicht ausreichend. Außerdem ist der Zusatzaufwand für die Kettenglieder und ihre Lagerung an den Werkstückträgern zu beachten. Eine ähnlicher Werkstücktriger ist auch aus der CH 669 167 bekannt.

### AUFGABE DER ERFINDUNG

Der Erfindung liegt die Aufgabe zugrunde, einen Werkstückträger mit den Merkmalen des Oberbegriffs des Patentanspruchs 1 und eine Werkstückfördereinrichtung mit einer Mehrzahl solcher Werkstückträger und den weiteren Merkmalen des Oberbegriffs des Anspruchs 10 aufzuzeigen, bei denen die Momente auf die Werkstückträger um vertikale Achsen reduziert sind und bei denen besonders gute Voraussetzungen für eine hochwirksame Staudruckreduzierung gegeben sind.

### LÖSUNG

Erfindungsgemäß wird die Aufgabe durch einen Werkstückträger mit den Merkmalen des Patentanspruchs 1 gelöst. Besonders bevorzugte Ausführungsformen des Werkstückträgers sind in den Unteransprüchen 2 bis 9 angegeben. Weiterhin wird die Aufgabe durch eine Werkstückfördereinrichtung mit den Merkmalen des Patentanspruchs 10 gelöst.

### BESCHREIBUNG DER ERFINDUNG

Bei dem neuen Werkstückträger ist eine weitere Abstützrolle zum Abrollen auf der Abstützfläche auf der anderen Seite der Vertiefung in der Führungsbahn vorgesehen. Das heißt, es gibt eine Abstützrolle auf jeder Seite der Vertiefung. Allein hierdurch werden die Momente um eine vertikale Achse auf dem Werkstückträger reduziert, indem sich die Einflüsse beider Abstützrollen zumindest teilweise kompensieren. Außerdem sorgt die zusätzliche Abstützrolle für eine Verbreiterung der Abstützbasis des Werkstückträgers an der Führungsbahn, wodurch eine noch höhere Stabilität gegenüber Verkippungen um die Längsachse der Führungsbahn erreicht wird. Gleichzeitig ist bei dem neuen Werkstückträger eine derartige Abstimmung der Höhenlagen der beiden Abstützrollen und der Führungsfüße vorgesehen, dass maximal einer der Führungsfüße mit der Förderkette in Kontakt tritt. Der andere Führungsfuß, der niemals mit der Förderkette in Kontakt tritt, dient bei dem neuen Werkstückträger ausschließlich zur seitlichen Führung an der Seitenwandung der Vertiefung in der Führungsbahn. Die Normalkraft zwischen der Förderkette und dem mit dieser in Kontakt tretenden Führungsfuß des Werkstückträgers kann durch die Lage des Schwerpunkts des Werkstückträgers und des Werkstücks relativ zu den Abstützrollen und dem mit der Förderkette in Kontakt tretenden Führungsfußes weitestgehend unabhängig von der insgesamt abzustützenden Schwerkraft des Werkstückträgers und eines darauf angeordneten Werkstücks festgelegt werden. Insbesondere können die Reibungskräfte auch bei sehr schwergewichtigen Werkstückträgern bzw. Werkstücken auf das für ihre Förderung notwendige Mindestmaß begrenzt werden. Allein hierdurch wird der Staudruck reduziert, der durch sich vor einer Bearbeitungsstation aufstauende Werkstückträger verursacht wird, weil selbst ohne weitere staudruckreduzierende Maßnahmen jeder Werkstückträger nur mit einer minimalen Kraft auf die Bearbeitungsstation drückt.

Wie schon angeklungen ist, kommt vorzugsweise immer nur derselbe Führungsfuß mit der Förderkette in Kontakt, während der andere Förderfuß niemals mit der Förderkette in Kontakt gerät. Dies hängt damit zusammen, dass der Schwerpunkt des Werkstückträgers mit und/oder ohne aufgesetztes Werkstück in horizontaler Richtung vorzugsweise innerhalb eines durch die Abstützrollen und den mit der Förderkette in Kontakt tretenden Abstützfuß definierten Dreiecks liegt, damit Lageinstabilitäten um eine die Abstützrollen verbindende Linie herum vermieden werden.

Bei dem neuen Werkstückträger ist es weiterhin bevorzugt, wenn immer nur der in Förderrichtung vorne liegende Führungsfuß mit der Förderkette in Kontakt tritt, weil dies in Bezug auf die Abstützrollen eine Zuganordnung für die Aufbringung einer Förderkraft von der Förderkette auf den Werkstückträger bedeutet, die gegenüber einer Schubanordnung aus Stabilitätsgründen bevorzugt ist, wobei aber auch eine Schubanordnung, bei der immer nur der in Förderrichtung hinten liegende Führungsfuß mit der Förderkette in Kontakt tritt, grundsätzlich möglich ist.

Wenn der mit der Förderkette in Kontakt tretende Führungsfuß einen größeren Abstand zu einer Verbindungslinie der Abstützrollen aufweist als der andere Führungsfuß, ist nicht nur das Dreieck, innerhalb dessen sich der Schwerpunkt des Werkstückträgers in horizontaler Richtung angeordnet werden kann, besonders groß, sondern es ergeben sich auch besonders günstige Hebelverhältnisse um die Verbindungslinie der Abstützrollen, um mit einfachen Mitteln eines Staudruckreduzierung zu realisieren.

Für diese Staudruckreduzierung werden an der Vorder- und Rückseite des Werkstückträgers komplementäre Führungsflächen vorgesehen, die beim Aufeinanderauflaufen mehrerer Werkstückträger den in Kontakt mit der Förderkette stehenden Führungsfuß des jeweils auflaufenden Werkstückträgers von der Förderkette weg anheben. Durch dessen relativ großen Abstand zu der Verbindungslinie der Abstützrolle ist hierfür nur eine minimale Kippbewegung des Werkstückträgers um die Verbindungslinie der Abstützrollen erforderlich, weil ein Anheben des Führungsfußes um wenige Zehntelmillimeter in aller Regel ausreichend ist.

Wenn die komplementären Führungsflächen eine mittlere Neigung von typischerweise 10° bis 30° aufweisen, ist beim Auflaufen eines Werkstückträgers auf einen stehenden Werkstückträger sichergestellt, dass der auflaufende Werkstückträger nicht instantan gestoppt, sondern über eine gewisse Strecke abgebremst wird. Außerdem ist sichergestellt, dass die Werkstückträger dann, wenn sich ein Stau auflöst, einzeln nacheinander über ihren einen Führungsfuß wieder mit der Förderkette in Kontakt treten und so erneut in Bewegung versetzt werde. Dabei gleiten die komplementären Führungsflächen wieder voneinander ab, sobald der jeweils vorne liegende Werkstückträger frei wird. Dies führt auch zu einer Trennung der Werkstückträger in der Förderrichtung, so dass sie bei einem nachfolgenden Auflaufvorgang nicht alle gleichzeitig sondern nacheinander abgebremst werden. Die Förderkette wird so beim Abbremsen und beim wieder in Bewegung Setzen auch von mehreren, dicht aufeinander folgenden Werkstückträgern vor Lastspitzen geschützt. Die Belastung der Förderkette ist bei dem neuen Werkstückträger durch die wesentliche Abstützung seiner Gewichtskraft an den Abstützflächen der Führungsbahn sowieso vergleichsweise gering.

Besonders bevorzugt sind die komplementären Führungsflächen an den Führungsfüßen des Werkstückträgers vorgesehen. Dabei erweist es sich als günstig, dass der nicht mit der Förderkette in Kontakt tretende Führungsfuß näher an der Verbindungslinie der Abstützrollen liegt, so dass er nicht durch einen vorderen Führungsfuß eines auflaufenden Werkstückträgers um die Verbindungslinie der Abstützrollen verschwenkt oder gar auf die Förderkette gedrückt wird.

Die komplementären Führungsflächen können Kegelmantelflächen an den als Drehteile ausgebildeten Führungsfüßen sein. Derartige Führungsfüße sind mit vertretbarem Aufwand herstellbar. Obwohl kegelmantelförmige Führungsflächen nur in einen linienförmigen Kontakt miteinander treten, ist ein Verschleiß dieser Führungsflächen aufgrund einer ohnehin vorzunehmenden verschleißfesten Ausbildung der Führungsfüße nicht zu erwarten.

Besonders bevorzugt ist es, wenn die beiden Führungsfüße eines Werkstückträgers aus identischen Bauteilen ausgebildet sind, die in umgekehrten vertikalen Orientierungen angeordnet sind.

Die Abstützrollen des neuen Werkstückträgers sind vorzugsweise jeweils um vertikale Schwenkachsen verschwenkbar gelagert, die in einem Abstand zu ihrer jeweiligen horizontalen Drehachse verlaufen, um eine möglichst querkraftfreie Ausrichtung der Abstützrolle zu der jeweiligen von den Führungsfüßen vorgegebenen Bewegungsrichtung des Werkstückträgers gegenüber der Führungsbahn zu ermöglichen.

Die Führungsbahn der neuen Werkstückfördereinrichtung weist als kennzeichnendes Merkmal auf beiden Seiten ihrer Vertiefung auf einem Grundkörper aus Aluminium aufgesetzte Rollbahnen zur Ausbildung der Abstützflächen für die Abstützrollen auf. Die Rollbahnen können z. B. aus Stahl oder einem anderen hochabriebfesten Material ausgebildet sein, sie können aber auch aus einem Material bestehen, das unter dem Gesichtspunkt des Lärmschutzes ausgewählt ist. Wenn es damit zu einem höheren Verschleiß neigt, können die Rollbahnen auch auswechselbar ausgebildet sein.

### KURZBESCHREIBUNG DER FIGUREN

Im Folgenden wird die Erfindung anhand eines bevorzugten Ausführungsbeispiels weiter erläutert und beschrieben.
- Fig. 1: zeigt einen Längsschnitt durch eine Führungsbahn einer Werkstückfördereinrichtung mit einem von der Führungsbahn geführten Werkstückträger.
- Fig. 2: zeigt eine Folge von Werkstückträgern in einer Seitenansicht mit in gestrichelten Linien wiedergegebenen Konturen der Führungsbahn gemäß Fig. 1.
- Fig. 3: zeigt eine perspektivische Ansicht der Werkstückträger gemäß Fig. 2 ohne die Führungsbahn; und
- Fig. 4: zeigt einen hinteren Führungsfuß eines vorlaufenden und einen vorderen Führungsfuß eines darauf auflaufenden Werkstückträgers in Relation zu der Oberseite einer Förderkette.

### FIGURENBESCHREIBUNG

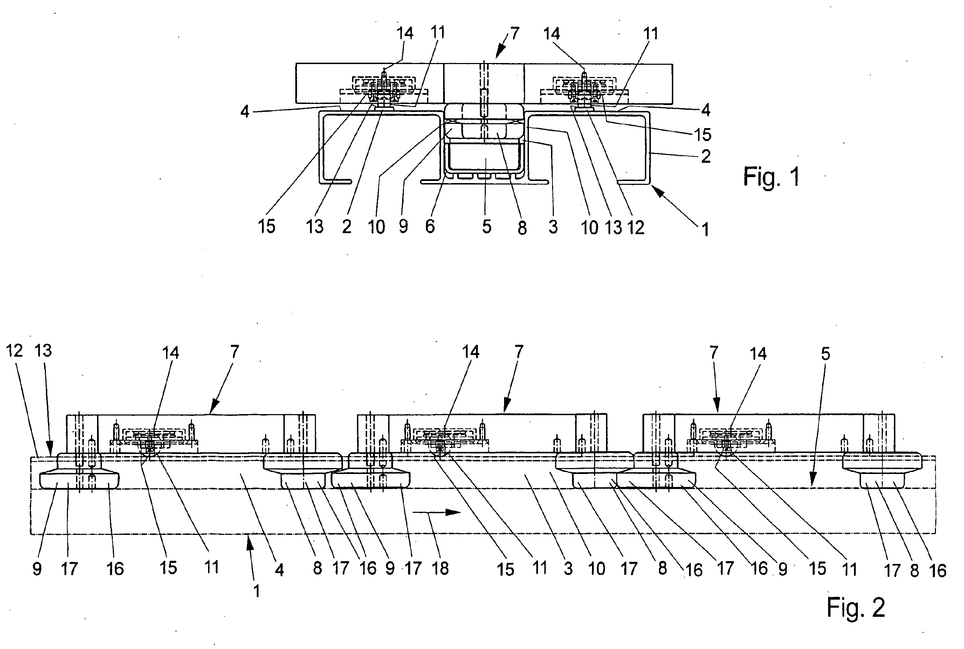

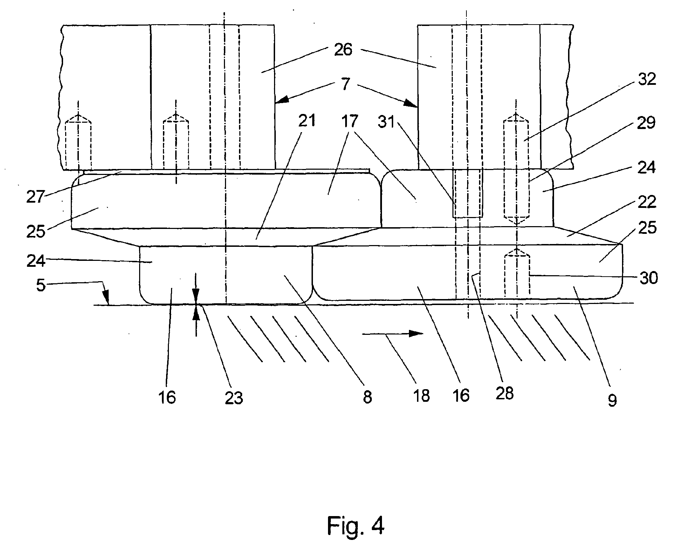

Die in **Fig. 1** wiedergegebene Führungsbahn 1 baut auf einem Aluminiumprofil 2 auf. Das Aluminiumprofil 2 stellt den Grundkörper der Führungsbahn 1 dar und bildet eine Vertiefung 3 zwischen horizontalen Seitenflächen 4 aus. Am Grund der Vertiefung 3 verläuft eine Förderkette 5 in einer Wanne 6, die in die Vertiefung 3 eingesetzt ist und die aufgrund ihrer höheren Abriebfestigkeit einen Verschleiß des Aluminiumprofils 2 durch die durch die Vertiefung 3 gezogene Förderkette 5 verhindert. Die Förderkette 5 überträgt Reibungskräfte auf einen Werkstückträger 7, der zwei in die Vertiefung 3 eingreifende Führungsfüße 8 und 9 aufweist. Die Führungsfüße 8 und 9 bewirken eine seitliche Führung des Werkstückträgers 7 gegenüber der Führungsbahn 1, indem sie sich an Seitenwandungen 10 abstützen, die die Vertiefung 3 seitlich begrenzen. In Kontakt mit der Förderkette 5 tritt nur der in Förderrichtung vorne liegende Führungsfuß 8, während der hintere Führungsfuß 9 immer oberhalb der Förderkette 5 endet. Hierauf wird im Zusammenhang mit Fig. 4 im Detail eingegangen werden. Die Abstützung der Schwerkraft des Werkstückträgers 7 und eines darauf gelagerten, hier nicht dargestellten Werkstücks erfolgt neben dem vorderen Führungsfuß 8 durch Abstützrollen 11, die auf beiden Seiten der Vertiefung 3 vorgesehen sind und die auf Rollbahnen 12 abrollen. Die Rollbahnen 12 sind auf die Seitenflächen 4 des Aluminiumprofils 2 aufgesetzt und bilden Abstützflächen 13 für die Abstützrollen 11 aus. Diese Abstützflächen 13 können sich auch über die gesamten Seitenflächen 4 hinwegerstrecken, insbesondere im Verlauf von Kurven der Führungsbahn 2 sind sie typischerweise breiter als in Fig. 2 dargestellt.

Die Seitenansicht mehrerer Werkstückträger gemäß **Fig. 2** zeigt, dass die Abstützrollen 11 der Werkstückträger 7 näher bei deren hinteren Füßen 9 als bei deren vorderen Füßen 8 liegen. Außerdem ist angedeutet, dass die Abstützrollen 11 um vertikale Schwenkachsen 14 verschwenkbar an den Werkstückträgern 7 gelagert sind, die mit Abstand vor den horizontalen Drehachsen 15 der Abstützrollen 11 verlaufen. So können sich die Abstützrollen 11 passiv zu der jeweiligen Bewegungsrichtung der Werkstückträger gegenüber der Führungsbahn 1 ausrichten, die von den in die Vertiefung 3 eingreifenden Führungsfüßen 8 und 9 vorgegeben wird. Aus Fig. 2 ist weiterhin ersichtlich, dass die Führungsfüße 8 und 9 aus an sich identischen Bauteilen 16 ausgebildet sind, bei denen es sich um Drehteile aus Stahl mit geglätteter und gehärteter Oberfläche 17 handelt. Die Führungsfüße 8 und 9 sind jedoch in unterschiedlicher vertikaler Orientierung vorgesehen, d. h. die hinteren Führungsfüße 9 sind gegenüber den vorderen Führungsfüßen 8 um eine horizontale Achse um 180° verdreht. Außerdem liegen die hinteren Führungsfüße 9 etwas höher, weil nur die vorderen Führungsfüße 8 in Kontakt mit der Förderkette 5 gebracht werden sollen, die die Werkstückträger 7 durch Reibungskräfte in Richtung eines Pfeils 18 mitnimmt. Auch der Kontakt des vorderen Führungsfußes 8 mit der Förderkette 5 wird bei den Werkstückträgern 7 unterbrochen, wenn diese aufeinander auflaufen, d. h. wenn sie sich stauen, was in Fig. 2 angedeutet ist. Ein solcher Stau kann beispielsweise vor einer Bearbeitungsstation für die von den Werkstückträgern transportierten Werkstücke entstehen. Der vorderste Werkstückträger 7 wird angehalten, um das von ihm transportierte Werkstück zu bearbeiten und die weiteren Werkstückträger laufen auf ihn auf. Hierdurch wird ein Staudruck auf die Bearbeitungsstation hervorgerufen, wenn die auflaufenden Werkstückträger 7 weiterhin von der Förderkette 5 durch Reibungskräfte beaufschlagt werden. Wie dies hier verhindert wird, wird detailliert im Zusammenhang mit Fig. 4 erläutert werden.

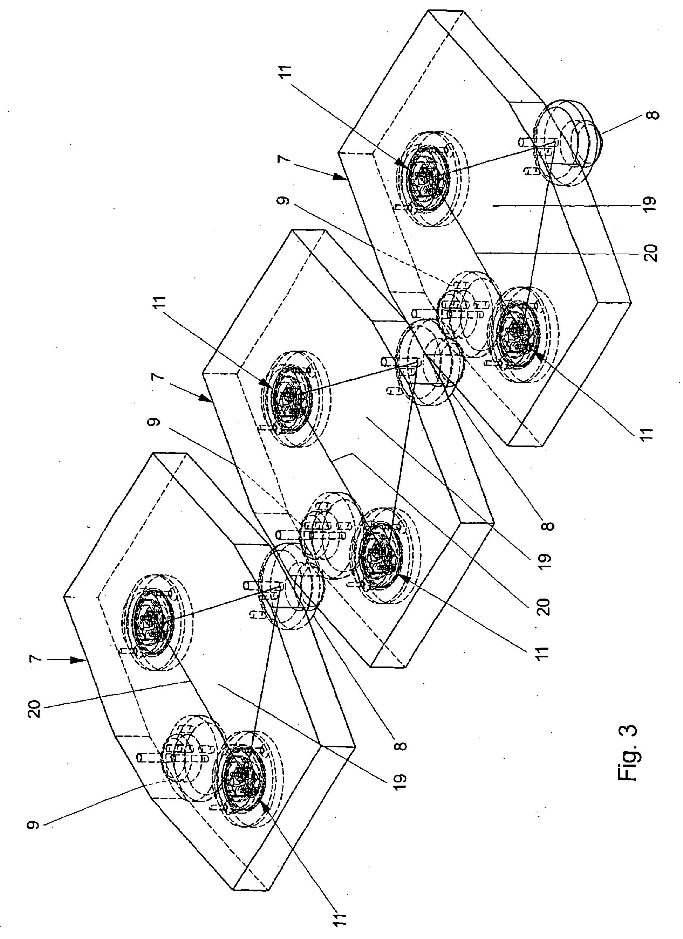

**Fig. 3** ist eine perspektivische Wiedergabe der Werkstückträger 7 gemäß Fig. 1 ohne Darstellung der Führungsbahn 1. Anhand von Fig. 3 lässt sich ein horizontala ausgerichtetes Dreieck 19 erläutern, über dem sich der Schwerpunkt des jeweiligen Werkstückträgers 17 für eine stabile Abstützung an der Führungsbahn befinden muss. Die Eckpunkte der Dreiecke 19 sind durch die Abstützrollen 11 und die vorderen Führungsfüße 8 definiert. Die genaue Lage des Schwerpunkts innerhalb des Dreiecks 19 bestimmt dabei, wie viel von der Schwerkraft über die Abstützrollen 11 abgetragen wird oder als Normalkraft zwischen dem Führungsfuß 8 und der darunter angeordneten Förderkette. Das Dreieck 19 kann durch den Abstand des vorderen Führungsfußes 8 zu der Verbindungslinie 20 der Abstützrollen 11 und den Abstand der Abstützrollen 11 untereinander vergrößert werden. Innerhalb des Dreiecks 19 ist auch eine Schwerpunktverlagerung durch Aufsetzen eines Werkstückes auf den Werkstückträger 7 unproblematisch. Der relativ größere Abstand des Führungsfußes 8 zu der Verbindungslinie 20 stellt überdies sicher, dass der Führungsfuß 9 unter keinen Umständen mit der unter ihm durchlaufenden Förderkette in Kontakt tritt, weil auch ein Abheben des Führungsfußes 8 von der Förderkette nicht dazu führt, dass sich der Führungsfuß 9 bis auf die Förderkette absenkt.

**Fig. 4** zeigt im Detail, wie beim Aufeinanderauflaufen von zwei Werkstückträgern 7 der Führungsfuß 8 des auflaufenden Werkstückträgers 7 durch den hinteren Führungsfuß 9 des vorlaufenden bzw. vor ihm stehenden Werkstückträgers 7 von der Förderkette 5 abgehoben wird, so dass keine Reibungskräfte mehr von der Förderkette 5 auf den Führungsfuß 8 übertragen werden. Hierzu sind an den Oberflächen 17 der Führungsfüße 8 und 9 komplementäre Führungsflächen 21 und 22 an den Führungsfüßen 8 und 9 ausgebildet. Die Führungsfläche 21 an dem Führungsfuß 8 ist eine schräg nach unten weisende Kegelmantelfläche, die beim Aufeinanderauflaufen der Werkstückträger 7 auf eine ebensolche, aber schräg nach oben zeigende Kegelmantelfläche als Führungsfläche 22 trifft und diese hoch gleitet. Hierdurch wird der Führungsfuß 8 bis auf einen Abstand 23 von der Förderkette 5 abgehoben, der die weitere Übertragung von Reibungskräften von der Förderkette 5 unterbindet. Die Steigung in den Führungsflächen 21 und 22 ist dabei so gewählt, dass der Führungsfuß 8 anschließend nicht unter Rückwärtsbewegung des aufgelaufenen Werkstückträgers 7 von selbst an dem Führungsfuß 9 abgleitet, so dass er erneut in Kontakt mit der Förderkette 5 gelangt. Vielmehr kommen die Führungsfüße 8 und 9 erst dann auseinander, wenn der vorlaufende Werkstückträger 7 mit der Förderkette 5 abgefördert wird, d. h. der Führungsfuß 9 unter dem Führungsfuß 8 weggezogen wird. Erst dann setzt der Führungsfuß 8 wieder auf die Förderkette auf. Hierdurch stellt sich automatisch ein gewisser Abstand zwischen den Werkstückträgern 7 beim Wiederauflösen eines Staus ein. Durch die bereits erläuterten Hebelverhältnisse, bei denen der jeweils hintere Führungsfuß 9 näher an der Verbindungslinie der Abstützrolle eines Werkstückträgers 7 liegt, wird ausgeschlossen, dass der in Fig. 4 nicht sichtbare Führungsfuß 8 des in Förderrichtung gemäß Pfeil 18 vorne liegenden Werkstückträgers 7 von der Förderkette 5 abgehoben wird, so dass dieser nicht mehr anlaufen kann, wenn er ansonsten freigegeben ist. Der nur linienförmige Kontakt zwischen den kegelmantelförmigen Führungsflächen 21 und 22 ist aufgrund der gehärteten Oberfläche 17 der für beide Führungsfüße 8 und 9 verwendeten Bauteile 16 unproblematisch. Oberhalb und unterhalb der Führungsflächen 21 bzw. 22 weisen die Führungsfüße 8 und 9 Bereiche 24 mit kleinerem und Bereiche 25 mit größerem Durchmesser auf. Die Bereiche 25 mit größerem Durchmesser bewirken die seitliche Führung der Werkstückträger 7 an den Seitenwandungen der Vertiefung in der Führungsbahn. Der Bereich 24 des vorderen Führungsfußes 8 steht mit seiner Unterseite in Kontakt mit der Förderkette 5, und er weist eine etwas größere vertikale Erstreckung als der Bereich 25 auf, damit dieser bei dem hinteren Führungsfuß 9, wo er nach unten zeigt, nicht in Kontakt mit der Förderkette 5 tritt. Beim Aufeinanderauflaufen der Werkstückträger 7 schlägt letztlich jeweils immer ein Bereich 24 des einen an einen Bereich 25 des anderen Führungsfußes 8 bzw. 9 an. Um den Unterschied in der vertikalen Erstreckung zwischen den Bereichen 24 und 25 auszugleichen, ist eine Unterlegscheibe 27 zwischen dem Führungsfuß 8 und dem Grundkörper 26 des zugehörigen Werkstückträgers angeordnet. Ein entsprechender Höhenausgleich kann aber auch durch andere Maßnahmen erfolgen. Die die Führungsfüße 8 und 9 ausbildenden Bauteile 16 weisen jeweils ein Befestigungsgewinde 28 sowie Bohrungen 29 und 30 für ihre drehfeste Lagerung an dem Grundkörper 26 des jeweiligen Werkstücksträgers 7 auf. In die Befestigungsbohrung greift dabei eine Befestigungsschraube 31, in die jeweils nach oben zeigende Bohrung 29 bzw. 30 ein als Verdrehsicherung wirkender Stift 32 von dem Grundkörper 26 aus ein.

### BEZUGSZEICHENLISTE

- 1: Führungsbahn
- 2: Aluminiumprofil
- 3: Vertiefung
- 4: Seitenfläche
- 5: Förderkette
- 6: Wanne
- 7: Werkstückträger
- 8: Führungsfuß
- 9: Führungsfuß
- 10: Seitenwandung
- 11: Abstützrolle
- 12: Rollbahn
- 13: Abstützfläche
- 14: Schwenkachse
- 15: Drehachse
- 16: Bauteil
- 17: Oberfläche
- 18: Pfeil
- 19: Dreieck
- 20: Verbindungslinie
- 21: Führungsfläche
- 22: Führungsfläche
- 23: Abstand
- 24: Bereich
- 25: Bereich
- 26: Grundkörper
- 27: Unterlegscheibe
- 28: Befestigungsgewinde
- 29: Bohrung
- 30: Bohrung
- 31: Befestigungsschraube
- 32: Stift

## Patentansprüche

1. Werkstückträger (7) für eine Werkstückfördereinrichtung mit einer Förderkette (5) zum Fördern der Werkstückträger (7) durch Übertragung von Reibungskräften und mit einer Führungsbahn (1) zum Führen und Abstützen der Förderkette (5) und der Werkstückträger (7), wobei die Förderkette (5) in einer Vertiefung (3) der Führungsbahn (1) verläuft und wobei die Führungsbahn (1) eine sich auf beiden Seiten von der Vertiefung (3) weg erstreckende Abstützfläche (13) aufweist, wobei der Werkstückträger (7) einen vorderen und einen hinteren Führungsfuß (8, 9), die zum Eingriff in die Vertiefung (3) der Führungsbahn (1) vorgesehen sind, und eine Abstützrolle (11) zum Abrollen auf der Abstützfläche (13) auf einer Seite der Vertiefung (3) in der Führungsbahn (1) aufweist, **dadurch gekennzeichnet, dass** an dem Werkstückträger (7) eine weitere Abstützrolle (11) zum Abrollen auf der Abstützfläche (13) auf der anderen Seite der Vertiefung (3) in der Führungsbahn (1) vorgesehen ist und dass die Höhenlagen der beiden Abstützrollen (11) und der Führungsfüße (8 und 9) so abgestimmt sind, dass maximal einer der Führungsfüße (8 oder 9) mit der Förderkette (5) in Kontakt tritt.

2. Werkstückträger (7) nach Anspruch 1, **dadurch gekennzeichnet, dass** immer nur derselbe Führungsfuß (8) mit der Förderkette in Kontakt tritt und dass der Schwerpunkt des Werkstückträgers (7) mit und/oder ohne aufgesetztes Werkstück in horizontaler Richtung innerhalb eines durch die Abstützrolle (11) und den mit der Förderkette (5) in Kontakt tretenden Abstützfuß (8) definierten Dreiecks (19) liegt.

3. Werkstücksträger (7) nach Anspruch 2, **dadurch gekennzeichnet, dass** immer nur der vordere Führungsfuß mit der Förderkette in Kontakt tritt.

4. Werkstückträger (7) nach Anspruch 2 oder 3, **dadurch gekennzeichnet, dass** der mit der Förderkette in Kontakt tretende Führungsfuß (8) einen größeren Abstand zu einer Verbindungslinie der Abstützrollen (11) aufweist als der andere Führungsfuß (9).

5. Werkstückträger (7) nach einem der Ansprüche 2 bis 4, **dadurch gekennzeichnet, dass** an der Vorder- und der Rückseite des Werkstückträgers (7) komplementäre Führungsflächen (21 und 22) vorgesehen sind, die beim Aufeinanderlaufen mehrerer Werkstückträger (7) den in Kontakt mit der Förderkette (5) stehenden Führungsfuß (8) des jeweils auflaufenden Werkstückträgers (7) von der Förderkette (5) weg anheben.

6. Werkstückträger (7) nach Anspruch 5, **dadurch gekennzeichnet, dass** die komplementären Führungsflächen (21 und 22) an den Führungsfüßen (8 und 9) vorgesehen sind.

7. Werkstückträger (7) nach Anspruch 6, **dadurch gekennzeichnet, dass** die komplementären Führungsflächen (21 und 22) Kegelmantelflächen an den als Drehteile ausgebildeten Führungsfüßen sind.

8. Werkstückträger (7) nach einem der Ansprüche 5 bis 7, **dadurch gekennzeichnet, dass** die komplementären Führungsflächen (21 und 22) eines Werkstückträgers (7) an identischen Bauteilen (16) ausgebildet sind, die in umgekehrter vertikaler Orientierung angeordnet sind.

9. Werkstückträger (7) nach einem der Ansprüche 1 bis 8, **dadurch gekennzeichnet, dass** die Abstützrollen (11) um vertikale Schwenkachsen (14) verschwenkbar gelagert sind, die in einem Abstand zu der jeweiligen horizontalen Drehachse (15) verlaufen.

10. Werkstückfördereinrichtung mit einer Förderkette (5) zum Fördern von Werkstückträgern (7) durch Übertragung von Reibungskräften, mit einer Führungsbahn (1) zum Führen und Abstützen der Förderkette (5) und der Werkstückträger (7), wobei die Förderkette (5) in einer Vertiefung (3) der Führungsbahn (1) verläuft und wobei die Führungsbahn (1) eine sich auf beiden Seiten von der Vertiefung (3) weg erstreckende Abstützfläche (13) aufweist, und mit einer Mehrzahl von Werkstückträgern (7) nach einem der Ansprüche 1 bis 9, **dadurch gekennzeichnet, dass** die Führungsbahn (1) auf beiden Seiten ihrer Vertiefung (3) auf ein Aluminiumprofil (2) aufgesetzte Rollbahnen (12) zur Ausbildung der Abstützflächen (13) für die Abstützrollen (11) aufweist.

## Claims

1. A work piece carrier (7) for a work piece conveying apparatus, the work piece conveying apparatus including a conveyor chain (5) for conveying work piece carriers (7) via transfer of friction forces and a guiding track (1) for guiding and supporting the conveyor chain (5) and the work piece carriers (7), the conveyor chain running in a recess (3) of the guiding track (1) and the guiding track (1) having a supporting surface (13) laterally extending on both sides from the recess (3), the work piece carrier (7) comprising a front and a rear guiding foot (8, 9) which are provided for engaging into the recess (3) of the guiding track (1), and a support roller (11) for rolling on the supporting surface (13) on the one side of the recess (3) in the guiding track (1), **characterized in that** a further support roller (11) is provided at the work piece carrier (7) for rolling on the supporting surface (13) on the other side of the recess (3) in the guiding track (1), and that the height levels of both supporting rollers (11) and of the guiding feet (8 and 9) are tuned with regard to each other in such a way that at maximum one of the guiding feet (8 or 9) gets into contact with the conveyor chain (5).

2. The work piece carrier (7) of claim 1, **characterized in that** always only the same guiding foot (8) gets into contact with the conveyor chain (5), and that the center of mass of the work piece carrier (7), with or without a work piece being placed on the work piece carrier, is, in horizontal directions, located within a triangle (19) defined by the supporting rollers (11) and the guiding foot (8) contacting the conveyor chain (5).

3. The work piece carrier (7) of claim 2, **characterized in that** always only the front guiding foot gets into contact with the conveyor chain.

4. The work piece carrier (7) of claim 2 or 3, **characterized in that** the guiding foot (8) getting into contact with the conveyor chain is arranged at a greater distance to a connection line of the supporting rollers (11) than the other guiding foot (9).

5. The work piece carrier (7) of any of the claims 2 to 4, **characterized in that** complementary guiding surfaces (21 and 22) are provided at the front and rear side of the work piece carrier (7), which, upon several work piece carriers (7) running into another, lift the guiding foot (8) of the respective work piece carrier (7) running in, which is in contact with the conveyor chain (5), away from the conveyor chain (5).

6. The work piece carrier (7) of claim 5, **characterized in that** the complementary guiding surfaces (21 and 22) are located at said guiding feet (8 and 9).

7. The work piece carrier (7) of claim 6, **characterized in that** the complementary guiding surfaces (21 and 22) are surfaces shaped like envelopes of cones at the guiding feet which are provided as turned parts.

8. The work piece carrier (7) of any of the claims 5 to 7, **characterized in that** the complementary guiding surfaces (21 and 22) of one work piece carrier (7) are formed at identical parts (16) which are arranged in opposite vertical orientations.

9. The work piece carrier (7) of any of the claims 1 to 8, **characterized in that** the supporting rollers (11) are supported in such a way that they are swiveling about vertical swiveling axes (14) running at a distance to the respective horizontal rotation axis (15).

10. A work piece conveying apparatus including a conveyor chain (5) for conveying work piece carriers (7) via transfer of friction forces, a guiding track (1) for guiding and supporting the conveyor chain (5) and the work piece carriers (7), the conveyor chain running in a recess (3) of the guiding track (1) and the guiding track (1) having a supporting surface (13) laterally extending on both sides from the recess (3), and a plurality of work piece carriers (7) of any of the claims 1 to 9, **characterized in** the guiding track (1), on both sides of its recess (3), comprises runways (12) forming the supporting surfaces (13) for the supporting rollers (11), the runways being attached to an extruded body (2) of aluminum.

## Revendications

1. Support de pièces (7) pour un dispositif de transport de pièces avec une chaîne de transport (5) pour le transport des supports de pièces (7) par la transmission des forces de friction et avec une voie de guidage (1) pour le guidage et le support de la chaîne de transport (5) et des supports de pièces (7), la chaîne de transport (5) s'étendant dans un évidement (3) de la voie de guidage (1) et la voie de guidage (1) comportant une surface de support (13) s'étendant des deux côtés de l'évidement (3), le support de pièces (7) comportant une embase de guidage avant et embase de guidage arrière (8, 9) qui sont prévues en prise avec l'évidement (3) de la voie de guidage (1) et un rouleau de support (11) pour le roulement sur la surface de support (13) d'un côté de l'évidement (3) dans la voie de guidage (1), **caractérisé en ce qu'**il est prévu, sur le support de pièces (7), un autre rouleau de support (11) pour le roulement sur la surface de support (13) de l'autre côté de l'évidement (3) dans la voie de guidage (1) et **en ce que** les positions en hauteur des deux rouleaux de support (11) et des embases de guidage (8 et 9) sont réglées de telle manière qu'au maximum l'une des embases de guidage (8 ou 9) entre en contact avec la chaîne de transport (5).

2. Support de pièces (7) selon la revendication 1, **caractérisé en ce que** c'est toujours uniquement la même embase de guidage (8) qui entre en contact avec la chaîne de transport et **en ce que** le centre de gravité du support de pièces (7) avec et/ou sans pièce disposée dessus dans la direction horizontale se trouve à l'intérieur d'un triangle (19) défini par le rouleau de support (11) et l'embase de guidage (8) qui entre en contact avec la chaîne de transport (5).

3. Support de pièces (7) selon la revendication 2, **caractérisé en ce que** c'est toujours uniquement l'embase de guidage avant qui entre en contact avec la chaîne de transport.

4. Support de pièces (7) selon la revendication 2 ou 3, **caractérisé en ce que** l'embase de guidage (8) qui entre en contact avec la chaîne de transport présente une distance plus grande par rapport à une ligne de liaison des rouleaux de support (11) que l'autre embase de guidage (9).

5. Support de pièces (7) selon l'une quelconque des revendications 2 à 4, **caractérisé en ce qu'**il est prévu des surfaces de guidage complémentaires (21 et 22) sur la face avant et la face arrière du support de pièces (7) qui, lorsque plusieurs supports de pièces (7) butent les uns sur les autres, soulèvent l'embase de guidage (8) en contact avec la chaîne de transport (5) du support de pièces (7) respectivement en butée en l'éloignant de la chaîne de transport (5).

6. Support de pièces (7) selon la revendication 5, **caractérisé en ce que** les surfaces de guidage complémentaires (21 et 22) sont prévues sur les embases de guidage (8 et 9).

7. Support de pièces (7) selon la revendication 6, **caractérisé en ce que** les surfaces de guidage complémentaires (21 et 22) sont des surfaces d'enveloppes coniques sur les embases de guidage configurées comme des parties rotatives.

8. Support de pièces (7) selon l'une quelconque des revendications 5 à 7, **caractérisé en ce que** les surfaces de guidage complémentaires (21 et 22) d'un support de pièces (7) sont formées sur des éléments de construction identiques (16) qui sont disposés selon une orientation verticale inversée.

9. Support de pièces (7) selon l'une quelconque des revendications 1 à 8, **caractérisé en ce que** les rouleaux de support (11) sont logés de manière pivotante autour d'axes de pivotement verticaux (14) qui s'étendent à distance de l'axe de rotation horizontal respectif (15).

10. Dispositif de transport de pièces avec une chaîne de transport (5) pour le transport de supports de pièces (7) par la transmission des forces de friction, avec une voie de guidage (1) pour le guidage et le support de la chaîne de transport (5) et des supports de pièces (7), la chaîne de transport (5) s'étendant dans un évidement (3) de la voie de guidage (1) et la voie de guidage (1) comportant une surface de support (13) s'étendant des deux côtés de l'évidement (3), et avec une pluralité de supports de pièces (7) selon l'une quelconque des revendications 1 à 9, **caractérisé en ce que** la voie de guidage (1) comporte des deux côtés de son évidement (3) des voies de roulement (12) posées sur un profilé en aluminium (2) pour former les surfaces de support (13) pour les rouleaux de support (11);
